# EUROPÄISCHE PATENTSCHRIFT

(11) **EP 3 792 408 B1**
(45) Veröffentlichungstag und Bekanntmachung des Hinweises auf die Patenterteilung: **26.04.2023**
(21) Anmeldenummer: 20180666.8
(22) Anmeldetag: 18.06.2020
(51) Int. Cl.: E03B 3/16, B09C 1/00, B09C 1/02, C02F 1/00, E03B 3/18, E21B 43/02, E21B 43/10, E03B 3/24, E03B 3/26, E21B 43/08, C02F 1/28

(54) **FILTERANORDNUNG**
FILTER ASSEMBLY
AGENCEMENT DE FILTRE

(30) Priorität: 11.09.2019 DE 202019105023 U
(43) Veröffentlichungstag der Anmeldung: 17.03.2021
(73) Patentinhaber: IEG - Technologie GmbH, 73344 Gruibingen (DE)
(72) Erfinder: Alesi, Eduard J., 73344 Gruibingen (DE)
(74) Vertreter: Ruckh, Rainer Gerhard

(56) Entgegenhaltungen:
- EP-A1- 0 555 734
- CN-A- 110 075 605
- DE-A1- 3 931 011
- DE-C1- 19 828 917
- US-A1- 2002 141 827

## Beschreibung

Die Erfindung betrifft eine Filteranordnung.

Eine derartige Filteranordnung dient allgemein zur Behandlung und Reinigung von Grundwasser. Hierzu werden in einem unterirdischen Schacht mehrere die Filteranordnung bildende Filtereinheiten in Abstand übereinander angeordnet, wobei mit den einzelnen Filtereinheiten im Boden vorhandenes Grundwasser gereinigt werden kann. Auch ist es möglich von den Filtereinheiten Wasser zu einer oberirdischen Wasseraufbereitungseinheit über geeignete Rohrsysteme mit zugeordneten Pumpen zuzuführen.

Um eine fehlerfreie Funktion der einzelnen Filtereinheiten zu gewährleisten, und insbesondere um hydraulische Kurzschlüsse der den einzelnen Filtereinheiten zugeordneten Pumpen zu vermeiden, sind zwischen benachbarten Filtereinheiten im Schacht wasserdichte Abschlüsse vorgesehen. Diese wasserdichten Abschlüsse sind bei bekannten Filteranordnungen in Form von pneumatischen Packern ausgebildet. Derartige pneumatische Packer bilden aufblasbare Einheiten, wobei ein pneumatischer Packer im aufgeblasenen Zustand einen im Zwischenraum zwischen zwei benachbarten Filtereinheiten wasserdichten, sich über den gesamten Querschnitt des Schachts erstreckenden Abschluss bildet.

Ein Nachteil derartiger pneumatischer Packer besteht darin, dass deren Installation relativ aufwändig ist. Zudem ist nachteilig, dass die pneumatische Packer in regelmäßigen Zeitintervallen gewartet werden müssen, was einen weiteren unerwünschten Zeit- und Bearbeitungsaufwand mit sich bringt. Zudem sind derartige pneumatische Packer relativ teuer.

Schließlich ist nachteilig, dass die pneumatischen Packer aus Materialien bestehen, die nicht resistent gegen im Wasser vorhandene Chemikalien sind. Dies bedeutet, dass sich die pneumatischen Packer im Laufe der Zeit zersetzen und ausgetauscht werden müssen.

Die DE 39 31 011 A1 betrifft eine Anordnung zum Reinigen von verschmutzten Filtern in Brunnen zur Grundwasserreinigung, mit einem bis in den Bereich des Grundwassers getriebenen Schacht mit einer bereichsweise wasserdurchlässigen und bereichsweise wasserundurchlässigen Schachtwandung und mit mindestens auf Höhe der wasserdurchlässigen Schachtwandungen im Schacht angeordneten Filtern. Parallel zum Brunnenschacht, in geringem Abstand zur äußeren Schachtwandung und gleichmäßig über den Umfang der Schachtwandung sind verteilt mehrere Rohre in den Boden getrieben, die an ihren oberen, aus dem Erdreich herausragenden Enden über eine Pumpe mit einem im Brunnenschacht angeordneten, bis unterhalb des Grundwasserspiegels reichenden Saugrohr verbindbar sind. Die Rohre enden jeweils auf Höhe eines Bereiches mit wasserdurchlässiger Schachtwandung im Boden.

Die US 2002/0141829 A1 betrifft eine Vorrichtung zum Reinigen von Grundwasser, wobei diese zwei in einem Schacht angeordnete Reaktionskammern aufweist. Im unteren Bereich des Schachts befindet sich eine Pumpe um Grundwasser nach oben zu pumpen. In den Reaktionskammern befinden sich reaktive Filterstoffe. An die Außenseiten der Reaktionskammern angrenzend sind in vertikaler Richtung verlaufende Zirkulationsrohre geführt. Die Rohre sind abschnittsweise mit Sandpackungen oder Bentonit-Versiegelungen umgeben.

Die CN 110 075 605 A betrifft eine Vorrichtung zum Reinigen von Grundwasser. In einen Schacht sind Rohre eingeführt, die in vertikaler Richtung verlaufen und in unterschiedlichen Höhenlagen des Schachts enden. Am unteren Ende jedes Rohrs befindet sich eine Filtereinheit. Jede Filtereinheit ist von einer Schicht mit grobem Quarzsand umgeben. Die Schichten mit grobem Quarzsand sind durch Schichten mit feinem Quarzsand getrennt.

Die EP 0 555 734 A1 betrifft eine Anordnung zum Reinigen von Grundwasser mit einer Fördervorrichtung zum Erzeugen eines über Filter führenden Flüssigkeitskreislaufs zwischen einem bis in den Bereich des verunreinigten Grundwassers getriebenen Brunnenschacht und dem diesen umgebenden Erdreich. Der Brunnenschacht ist in einen oberen und einen unteren Bereich unterteilt, die voneinander abgetrennt sind und jeweils mindestens bereichsweise eine wasserdurchlässige Schachtwandung zur Wasseransaugung aus dem oder zur Wiedereinleitung des Wassers in das Erdreich aufweisen. Die beiden Bereiche sind mittels eines Durchgangsrohres miteinander verbunden. Sowohl im oberen als auch im unteren Bereich des Brunnenschachtes sind Filterkammern ausgebildet, die den gesamten freien Bohrquerschnitt des Brunnenschachtes einnehmen.

Die DE 198 28 917 C1 betrifft eine Anordnung von Brunnenfiltermaterial in Entnahme- oder Schluckbrunnen, wobei die vertikale Trennfläche des Bodenbereiches zum gebohrten Brunnenschacht mit einer in der Bohrtiefe verbleibenden Hilfsverrohrung gegen hydraulischen Grundbruch ausgebildet ist. Die Hilfsverrohrung ist als ein Bodenstützfilterrohr mit einem boden- und wasserabdichtenden Vollrohrabschnitt und einem koaxial im gleichen Durchmesser verlaufenden Filterrohrabschnitt ausgebildet, so dass der Schachtquerschnitt über die vertikale Filterlänge hinaus in den Vollrohrabschnitt hinein mit wieder entnehmbarem Filtermaterial angefüllt ist und den Filterschacht bildet.

Der Erfindung liegt die Aufgabe zugrunde, eine Filteranordnung der eingangs genannten Art bereitzustellen, welche einen einfachen, robusten Aufbau und gleichzeitig eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Filteranordnung mit einer Mehrfachanordnung von in einem unterirdischen Schacht angeordneten Filtereinheiten. Die Filtereinheiten sind im Schacht in Abstand übereinander angeordnet, wobei zwei benachbarte Filtereinheiten durch eine wasserdichte Schicht von Quellmaterial getrennt sind. An den einzelnen Filtereinheiten münden periphere Steigrohre aus, die bis zur Erdoberfläche verlaufen.

Mit den unterirdisch im Schacht in Abstand übereinander angeordneten Filtereinheiten der erfindungsgemäßen Filteranordnung können einzelne Reinigungs- und Filtrationsvorgänge mit dem vorhandenen Grundwasser durchgeführt werden.

Mit den Steigrohren kann gezielt eine Wasserzirkulation erzielt werden, um den einzelnen Filtereinheiten Wasser zuzuführen oder von diesen abzupumpen.

Die Filtereinheiten können insbesondere unterschiedlich ausgebildet sein, sodass mit diesen unterschiedliche Filtrationsprozesse oder allgemein Behandlungsprozesse durchgeführt werden können. Beispiele hierfür sind physikalische Behandlungen, wie Adsorptionsprozesse zur Filterung von Schadstoffen. Auch chemische oder mikrobiologische Behandlungen des Wassers sind in einer Filtereinheit möglich, um insbesondere Schadstoffe im Wasser zu eliminieren.

Damit die Funktionsfähigkeit jeder Filtereinheit unbeeinflusst von den jeweils anderen Filtereinheiten gewährleistet ist, und um insbesondere hydraulische Kurzschlüsse zwischen den einzelnen Filtereinheiten zu vermeiden, ist erfindungsgemäß zwischen jeweils benachbarten Filtereinheiten eine wasserdichte Schicht von Quellmaterial eingebracht. Das Quellmaterial erstreckt sich über den gesamten Querschnitt des Schachts und dichtet somit einen Zwischenbereich zwischen zwei Filtereinheiten vollständig ab.

Ein wesentlicher Vorteil besteht darin, dass das Quellmittel ein kostengünstig herstellbares Dichtmaterial darstellt. Beispielsweise können Tonmaterialien als Quellmaterialien verwendet werden.

Ein weiterer wesentlicher Vorteil besteht darin, dass das Quellmaterial als wasserdichte Trennung zwischen zwei Filtereinheiten sehr einfach und mit geringem konstruktiven Aufwand in den Schacht eingebracht werden kann. Dabei ist weiter vorteilhaft, dass von dem Quellmaterial gebildete wasserdichte Trennungen resistent gegen Chemikalien sind und somit keinem Verschleiß unterworfen sind. Damit ist keinerlei Aufwand zur Wartung oder Instandhaltung erforderlich.

Gemäß einer konstruktiv vorteilhaften Ausgestaltung der Filteranordnung verläuft der Schacht in vertikaler Richtung, und die Steigrohre verlaufen parallel zur Längsachse des Schachts. Dabei bilden die Filtereinheiten im Schacht eine koaxiale Anordnung.

Die Filtereinheiten sind in Ihrem Querschnitt vorteilhaft an die Querschnittsfläche des Schachts angepasst. Bei einem rotationssymmetrischen Querschnitt des Schachts bilden entsprechend die Filtereinheiten eine zur Längsachse des Schachts rotationssymmetrische Anordnung.

Gemäß einer weiteren konstruktiv vorteilhaften Ausgestaltung sind die Steigrohre in Umfangsrichtung der Filtereinheit versetzt zueinander angeordnet.

Insbesondere bilden die Steigrohre eine zur Längsachse des Schachts konzentrische Anordnung.

Damit ergibt sich eine besonders platzsparende, kompakte Anordnung der Steigrohre, da diese versetzt in geringem Abstand zueinander mit parallel laufenden Längsachsen verlaufen.

Gemäß einer vorteilhaften Ausgestaltung mündet an der Oberseite und/oder an der Unterseite einer Filtereinheit ein Steigrohr aus.

Dabei kann ein zu einer Filtereinheit geführtes Steigrohr als Infiltrationsrohr ausgebildet sein, über welches Wasser der Filtereinheit zuführbar ist.

Insbesondere können dem Wasser auch definierte Zusatzstoffe zugesetzt werden, die für eine Behandlung des Wassers in der Filtereinheit benötigt werden.

Mit dem zugeführten Wasser können auch Spülvorgänge durchgeführt werden, um die jeweilige Filtereinheit zu reinigen.

Weiterhin kann ein zu einer Filtereinheit geführtes Steigrohr als Pumprohr ausgebildet sein, über welches Wasser aus der Filtereinheit ausführbar ist.

Dabei ist zweckmäßig im Bereich der Ausmündung an der Filtereinheit dem Pumprohr eine Pumpe zugeordnet.

Die Pumpe kann besonders vorteilhaft am Pumprohr eingehängt werden, wodurch eine einfache Installation ermöglicht wird.

Besonders vorteilhaft ist jeder Filtereinheit ein Pumprohr und ein Infiltrationsrohr zugeordnet, sodass wahlweise und angepasst an die aktuell durchzuführenden Prozessschritte jeder Filtereinheit Wasser zugeführt oder Wasser von dieser abgepumpt werden kann.

Des Weiteren sind vorteilhaft die Mantelflächen der Filtereinheiten wasserdurchlässig. Dabei kann über die Mantelfläche einer Filtereinheit Wasser aus dieser ausleitbar und Grundwasser in diese einleitbar sein.

Damit können Zirkulationen von Wasser über die Filtereinheiten gezielt vorgegeben werden, wodurch Grundwasser im Erdreich mit unterschiedlichen Behandlungen in den Filtereinheiten gereinigt werden kann. Da den Filtereinheiten nicht nur Wasser über die Infiltrationsrohre zugeführt wird sondern auch über die Pumprohre Wasser aus den Filtereinheiten entnommen wird, können bei der Behandlung des Grundwassers unterschiedliche Reihenfolgen von in den Filtereinheiten durchgeführten Behandlungen vorgegeben werden.

Über den in der jeweiligen Filtereinheit vorhandenen Wasserdruck kann gesteuert werden, ob Wasser über die Mantelfläche der Filtereinheit ausgeführt wird oder ob Grundwasser über die Mantelfläche der Filtereinheit in diese eingeleitet werden.

Um einen guten Wassertransfer über die Mantelfläche einer Filtereinheit zu erhalten, sind die Mantelflächen der Filtereinheiten jeweils mit einer wasserdurchlässigen Materialschicht umgeben.

Insbesondere ist die wasserdurchlässige Materialschicht von einer Kiesschicht gebildet.

Die Filtereinheit mit der anschließenden Materialschicht erstreckt sich über die gesamte Querschnittsfläche des Schachts.

Zweckmäßig kann die wasserdurchlässige Materialschicht Bestandteil der Filtereinheit sein.

Gemäß einer vorteilhaften Ausführungsform sind die Steigrohre an eine oberirdische Zentraleinheit angeschlossen.

Prinzipiell kann die Zentraleinheit von einer reinen Verteilerstation für die Wasserzuführung oder -ableitung von und zu den Filtereinheiten sein.

In diesem Fall erfolgen alle Behandlungsprozesse des Wassers unterirdisch in den einzelnen Filtereinheiten. Dies ist deshalb vorteilhaft, da im Erdreich Mikroorganismen vorhanden sind, die für die Behandlung des Wassers von Bedeutung sein können. Derartige Mikroorganismen stehen bei einer Wasserbehandlung oberhalb der Erdoberfläche nicht zur Verfügung.

Generell kann die Funktionalität der erfindungsgemäßen Filteranordnung auch dahingehend erweitert sein, dass die Zentraleinheit Mittel zur Filterung und/oder Aufbereitung von Wasser aufweist.

Gemäß einer vorteilhaften Ausgestaltung kann die Filteranordnung wahlweise in einem Rechtslauf oder Linkslauf betrieben werden.

In einem Rechtslauf strömt Wasser in den Filtereinheiten von unten nach oben, in einem Linkslauf von oben nach unten.

Die Erfindung wird im Folgenden anhand der Zeichnungen erläutert. Es zeigen:
- Figur 1:: Schematische Darstellung eines Ausführungsbeispiels der erfindungsgemäßen Filteranordnung.
- Figur 2:: Querschnittsdarstellung von Steigrohren der Filteranordnung gemäß Figur 1.
- Figur 3:: Einzeldarstellung einer Filtereinheit für die Filteranordnung gemäß Figur 1.
- Figur 4:: Querschnittsdarstellung der Steigrohre der Filtereinheit gemäß Figur 3.
- Figur 5:: Darstellung einer Wasserzirkulation für die Filteranordnung gemäß Figur 1.

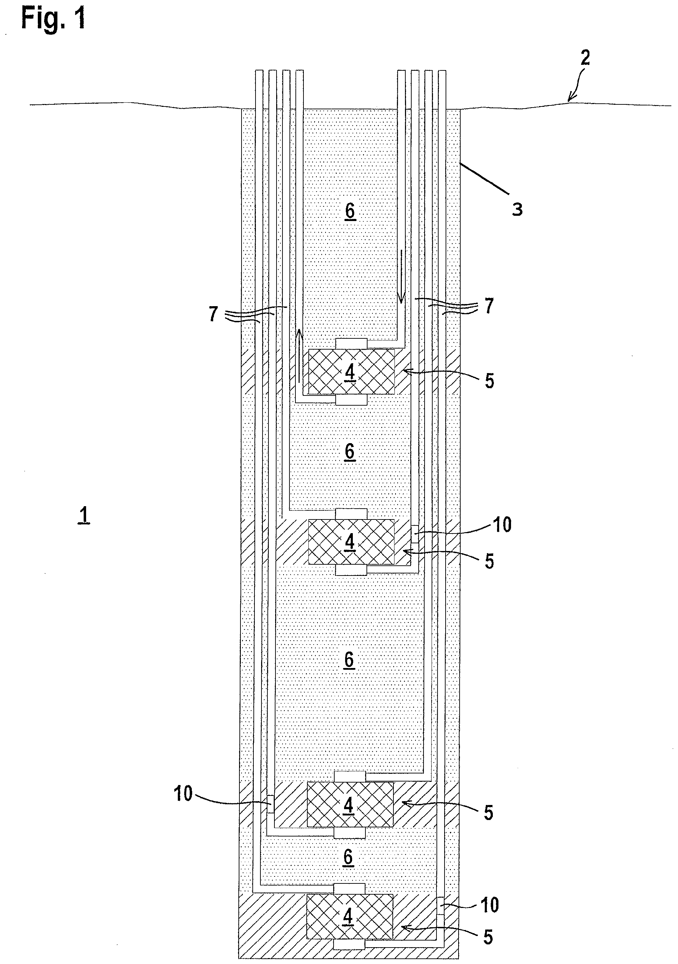

Figur 1 zeigt schematisch ein Ausführungsbeispiel der erfindungsgemäßen Filteranordnung 1.

Die Filteranordnung 1 ist unterirdisch in einem an der Erdoberfläche 2 ausmündenden Schacht 3 angeordnet. Die Längsachse des Schachts 3 verläuft in vertikaler Richtung. Im vorliegenden Fall weist der Schacht 3 einen konstanten kreisförmigen Querschnitt auf.

Die Filteranordnung 1 umfasst eine Mehrfachanordnung von Filtereinheiten 4, die im vorliegenden Fall in Form von Filterkartuschen ausgebildet sind. Die Filtereinheiten 4 können identisch oder unterschiedlich sein. Generell dienen die Filtereinheiten 4 zur physikalischen, chemischen oder mikrobiologischen Behandlung von Grundwasser.

Die Filtereinheiten 4 sind in Abstand zueinander in einer Vertikalanordnung im Schacht 3 integriert, wobei die Filtereinheiten 4 eine koaxiale, zur Längsachse des Schachts 3 symmetrische Anordnung ausbilden.

Die Mantelflächen der Filtereinheiten 4 sind für einen Wasseraustausch wasserdurchlässig ausgebildet. An die Mantelflächen schließt jeweils eine wasserdurchlässige Schicht 5, insbesondere eine Kiesschicht an. Jede Filtereinheit 4 und die an diese anschließende Kiesschicht erstrecken sich jeweils über die gesamte Querschnittsfläche des Schachts 3.

Erfindungsgemäß ist zwischen zwei benachbarten Filtereinheiten 4 jeweils eine Schicht mit Quellmaterial 6 vorgesehen, die sich über die gesamte Querschnittsfläche des Schachts 3 erstreckt und eine komplett wasserdichte Schicht ausbildet, die die benachbarten Filtereinheiten 4 so entkoppelt, dass keine hydraulischen Kurzschlüsse auftreten können. Das Quellmaterial 6 ist vorteilhaft von Tonmaterialien gebildet.

Wie Figur 1 zeigt, sind jeder Filtereinheit 4 zwei Steigrohre 7 zugeordnet, wobei jeweils ein Steigrohr 7 an der Oberseite und ein Steigrohr 7 an der Unterseite ausmündet.

Die Steigrohre 7 münden in waagerechter Richtung verlaufend an der jeweiligen Filtereinheit 4 aus und verlaufen dann in vertikaler Richtung, das heißt parallel zur Längsachse des Schachts 3 bis zur Erdoberfläche 2. Dabei verlaufen die Steigrohre 7 in geringem Abstand zu den Filtereinheiten 4.

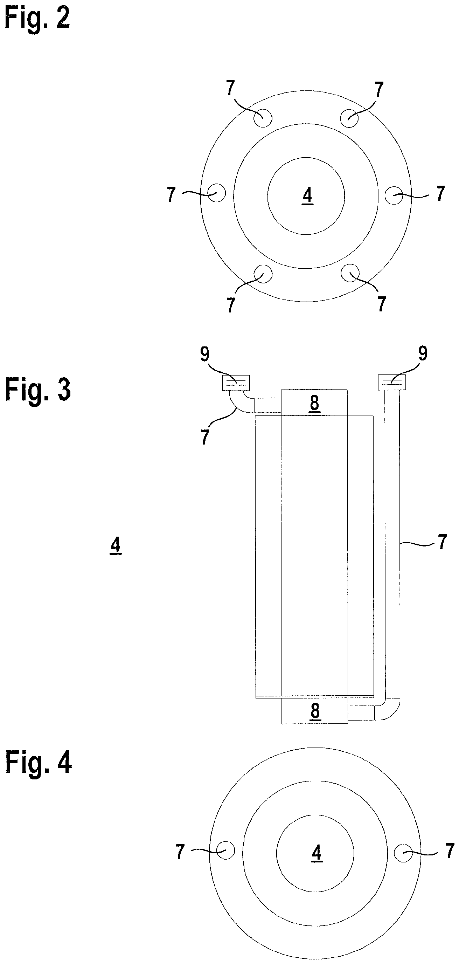

Die Steigrohre 7 sind in Umfangsrichtung der Filtereinheit 4 versetzt zueinander und bilden eine zur Längsachse des Schachts 3 konzentrische Anordnung (Figur 2).

Figur 3 zeigt eine Einzeldarstellung einer Filtereinheit 4 der Filteranordnung 1 gemäß Figur 1. Sowohl am Boden als auch an der Decke der Filtereinheit 4 befindet sich ein Anschlusselement 8, an welchem jeweils ein Steigrohr 7 ausmündet. Die Steigrohre 7 sind um 180° versetzt zueinander (Figur 4). An den Steigrohren 7 befinden sich Muffen 9 zur Verbindung einzelner Rohrsegmente.

Bei der Filteranordnung 1 gemäß Figur 1 sind in die an den Unterseiten der Filtereinheiten 4 ausmündenden Steigrohre 7 Pumpen 10 eingehängt. Dadurch bilden diese Steigrohre 7 Pumprohre mit denen Wasser in den Pumprohren nach oben gepumpt wird. Die an den Oberseiten der Filtereinheiten 4 ausmündenden Steigrohre 7 bilden im vorliegenden Fall Infiltrationsrohre über welche den Filtereinheiten 4 von oben Wasser zugeführt wird.

Die oberirdischen Ausmündungen können an eine nicht dargestellte Zentraleinheit angeschlossen sein. Diese kann im einfachsten Fall von einer Verteilerstation für in den Steigrohren 7 geführtes Wasser sein. Prinzipiell kann auch die Zentraleinheit Mittel zur Filterung und/oder Aufbereitung von Wasser enthalten.

Je nachdem welche Steigrohre 7 als Pumprohre oder Infiltrationsrohre ausgebildet sind, können verschiedene Zirkulationen von Wasser in der Filteranordnung 1 erzielt werden.

Beispielsweise kann die Filteranordnung 1 wahlweise in einem Rechtslauf oder Linkslauf betrieben werden.

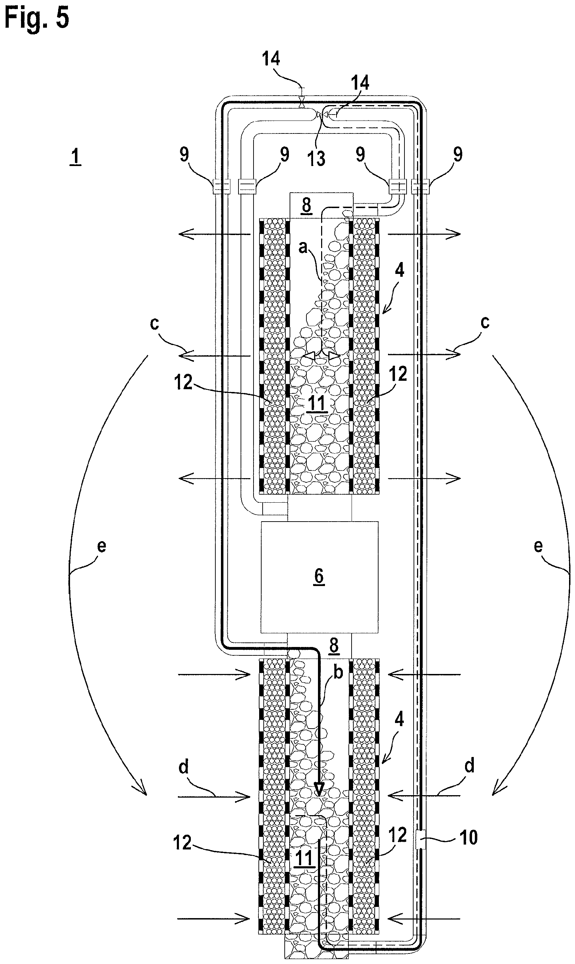

In Figur 5 ist für zwei Filtereinheiten 4 der Filteranordnung 1 eine derartige Wasserzirkulation dargestellt. Die dort dargestellten Filtereinheiten 4 enthalten in ihrem Innenraum ein Filtermaterial 11. An der Mantelfläche jeder Filtereinheit 4 ist eine Kiesummantelung 12 als Bestandteil der jeweiligen Filtereinheit 4 vorgesehen.

Wie Figur 5 zeigt, ist das an der Unterseite der unteren Filtereinheit 4 ausmündende Steigrohr 7 als Pumprohr ausgebildet, da in diesem eine Pumpe 10 eingehängt ist. In dem Pumprohr wird Wasser nach oben gepumpt.

Die Steigrohre 7 der Filtereinheiten 4 sind im oberirdischen Ausmündungsbereich über ein Leitungssegment 13 gekoppelt. Mittels Ventilen 14 kann der Wasserfluss in den Steigrohren 7 gesteuert werden.

Die an den Oberseiten der Filtereinheiten 4 ausmündenden Steigrohre 7 bilden Infiltrationsrohre, über welche Wasser von oben in die Filtereinheit 4 eingeführt wird (gekennzeichnet durch die Pfeile a, b).

Das an der Unterseite der oberen Filtereinheit 4 ausmündende Steigrohr 7 führt kein Wasser.

Aufgrund der vorgegebenen Konfiguration der Steigrohre 7 herrscht in der oberen Filtereinheit 4 ein Wasserüberdruck, sodass Wasser aus dieser Filtereinheit 4 in das Erdreich geleitet wird (gekennzeichnet durch die Pfeile c).

Demgegenüber herrscht in der unteren Filtereinheit 4 ein Wasserunterdruck, sodass Grundwasser vom Erdreich der Filtereinheit 4 über deren Mantelfläche zugeführt wird (gekennzeichnet durch die Pfeile d).

Damit ergibt sich im Erdreich eine von oben nach unten gerichtete Grundwasserströmung (gekennzeichnet durch die Pfeile e).

### Bezugszeichenliste

- (1): Filteranordnung
- (2): Erdoberfläche
- (3): Schacht
- (4): Filtereinheit
- (5): Schicht, wasserdurchlässig
- (6): Quellmaterial
- (7): Steigrohr
- (8): Anschlusselement
- (9): Muffe
- (10): Pumpe
- (11): Filtermaterial
- (12): Kiesummantelung
- (13): Leitungssegment
- (14): Ventil

## Patentansprüche

1. Filteranordnung (1) zur Behandlung und Reinigung von Grundwasser mit einer Mehrfachanordnung von in einem unterirdischen Schacht (3) angeordneten Filtereinheiten (4), wobei die Filtereinheiten (4) im Schacht (3) in Abstand übereinander angeordnet sind, wobei zwei benachbarte Filtereinheiten (4) durch eine wasserdichte Schicht von Quellmaterial (6) getrennt sind und wobei an den einzelnen Filtereinheiten (4) periphere Steigrohre (7) ausmünden, die bis zur Erdoberfläche (2) verlaufen.

2. Filteranordnung (1) nach Anspruch 1, **dadurch gekennzeichnet, dass** der Schacht (3) in vertikaler Richtung verläuft, und dass die Steigrohre (7) parallel zur Längsachse des Schachts (3) verlaufen.

3. Filteranordnung (1) nach einem der Ansprüche 1 oder 2, **dadurch gekennzeichnet, dass** die Filtereinheiten (4) im Schacht (3) eine koaxiale Anordnung bilden, und/oder dass die Filtereinheiten (4) eine zur Längsachse des Schachts (3) rotationssymmetrische Anordnung bilden.

4. Filteranordnung (1) nach einem der Ansprüche 1 - 3, **dadurch gekennzeichnet, dass** die Steigrohre (7) in Umfangsrichtung der Filtereinheiten (4) versetzt zueinander angeordnet sind.

5. Filteranordnung (1) nach einem der Ansprüche 1 - 4, **dadurch gekennzeichnet, dass** die Steigrohre (7) eine zur Längsachse des Schachts (3) konzentrische Anordnung bilden.

6. Filteranordnung (1) nach einem der Ansprüche 1 - 5, **dadurch gekennzeichnet, dass** an der Oberseite und/oder an der Unterseite einer Filtereinheit (4) ein Steigrohr (7) ausmündet, wobei insbesondere wenigstens ein zu einer Filtereinheit (4) geführtes Steigrohr (7) als Infiltrationsrohr ausgebildet ist, über welches Wasser der Filtereinheit (4) zuführbar ist.

7. Filteranordnung (1) nach einem der Ansprüche 1 - 6, **dadurch gekennzeichnet, dass** ein zu einer Filtereinheit (4) geführtes Steigrohr (7) als Pumprohr ausgebildet ist, über welches Wasser aus dieser Filtereinheit (4) ausführbar ist.

8. Filteranordnung (1) nach Anspruch 7, **dadurch gekennzeichnet, dass** im Bereich der Ausmündung des Steigrohrs (7) an der Filtereinheit (4) dem Pumprohr eine Pumpe (10) zugeordnet ist.

9. Filteranordnung (1) nach einem der Ansprüche 1 - 8, **dadurch gekennzeichnet, dass** die Mantelflächen der Filtereinheiten (4) wasserdurchlässig sind, so dass die Mantelfläche jeder Filtereinheit (4) Wasser aus dieser ausleitbar und Grundwasser in diese einleitbar ist.

10. Filteranordnung (1) nach Anspruch 9, **dadurch gekennzeichnet, dass** die Mantelflächen der Filtereinheiten (4) jeweils mit einer wasserdurchlässigen Materialschicht umgeben sind.

11. Filteranordnung (1) nach Anspruch 10, **dadurch gekennzeichnet, dass** die wasserdurchlässige Materialschicht von einer Kiesschicht gebildet ist.

12. Filteranordnung (1) nach einem der Ansprüche 10 oder 11, **dadurch gekennzeichnet, dass** die wasserdurchlässige Materialschicht Bestandteil der Filtereinheit (4) ist.

13. Filteranordnung (1) nach einem der Ansprüche 1 - 12, **dadurch gekennzeichnet, dass** das Quellmaterial (6) von Tonmaterialien gebildet ist.

14. Filteranordnung (1) nach einem der Ansprüche 1 - 13, **dadurch gekennzeichnet, dass** die Steigrohre (7) an eine oberirdische Zentraleinheit angeschlossen sind, wobei die Zentraleinheit Mittel zur Filterung und/oder Aufbereitung von Wasser aufweist.

15. Filteranordnung (1) nach einem der Ansprüche 1 - 14, **dadurch gekennzeichnet, dass** diese wahlweise in einem Rechtslauf oder Linkslauf betrieben werden kann.

## Claims

1. A filter assembly (1) for the treatment and purification of groundwater with a multiple assembly of filter units (4) arranged in a subterranean shaft (3), wherein the filter units (4) are arranged at a distance one above the other in the shaft (3), two adjacent filter units (4) being separated by a water-tight layer of swelling material (6) and peripheral riser pipes (7) opening out at the individual filter units (4) and extending as far as the surface of the ground (2).

2. The filter assembly (1) according to claim 1, **characterised in that** the shaft (3) extends in a vertical direction and that the riser pipes (7) extend parallel to the longitudinal axis of the shaft (3).

3. The filter assembly (1) according to one of claims 1 or 2, **characterised in that** the filter units (4) form a coaxial assembly in the shaft (3), and/or that the filter units (4) form an assembly rotationally symmetrical to the longitudinal axis of the shaft (3).

4. The filter assembly (1) according to one of the claims 1 to 3, **characterised in that** the riser pipes (7) are arranged offset from one another in the circumferential direction of the filter units (4).

5. The filter assembly (1) according to one of the claims 1 to 4, **characterised in that** the riser pipes (7) form an assembly that is concentric to the longitudinal axis of the shaft (3).

6. The filter assembly (1) according to one of the claims 1 to 5, **characterised in that** a riser pipe (7) opens out on the upper side and/or on the underside of a filter unit (4), wherein in particular at least one riser pipe (7) led to a filter unit (4) is formed as an infiltration pipe, via which water can be supplied to the filter unit (4).

7. The filter assembly (1) according to one of the claims 1 to 6, **characterised in that** a riser pipe (7) led to a filter unit (4) is designed as a pump pipe, via which water can be discharged from this filter unit (4).

8. The filter assembly (1) according to claim 7, **characterised in that** a pump (10) is associated with the pump pipe in the region of the outlet of the riser pipe (7) at the filter unit (4).

9. The filter assembly (1) according to one of the claims 1 to 8, **characterised in that** the circumferential surfaces of the filter units (4) are water-permeable, so that the circumferential surface of each filter unit (4) can discharge water from it and groundwater can be introduced into it.

10. The filter assembly (1) according to claim 9, **characterised in that** the outer surfaces of the filter units (4) are each surrounded by a water-permeable layer of material.

11. The filter assembly (1) according to claim 10, **characterised in that** the water-permeable material layer is formed by a gravel layer.

12. The filter assembly (1) according to one of the claims 10 or 11, **characterised in that** the water-permeable material layer is a component of the filter unit (4).

13. The filter assembly (1) according to one of the claims 1 to 12, **characterised in that** the swelling material (6) is formed by clay materials.

14. The filter assembly (1) according to one of the claims 1 to 13, **characterised in that** the riser pipes (7) are connected to an above-ground central unit, the central unit having means for filtering and/or treating water.

15. The filter assembly (1) according to any one of claims 1 to 14, **characterised in that** it can be selectively operated in a clockwise or anti-clockwise direction.

## Revendications

1. Agencement de filtre (1) pour le traitement et l'épuration des eaux souterraines avec un ensemble multiple d'unités de filtre (4) disposées dans un puits souterrain (3), dans lequel les unités de filtre (4) sont disposées à distance les unes au-dessus des autres dans le puits (3), deux unités de filtre adjacentes (4) étant séparées par une couche étanche à l'eau de matériau gonflant (6) et des tuyaux ascendants périphériques (7) débouchant sur les unités de filtre individuelles (4) et s'étendant jusqu'à la surface du sol (2).

2. Agencement de filtre (1) selon la revendication 1, **caractérisé en ce que** le puits (3) s'étend dans une direction verticale et que les tuyaux ascendants (7) s'étendent parallèlement à l'axe longitudinal du puits (3).

3. Agencement de filtre (1) selon l'une des revendications 1 ou 2, **caractérisé en ce que** les unités de filtre (4) forment un ensemble coaxial dans le puits (3), et/ou que les unités de filtre (4) forment un ensemble à symétrie de révolution par rapport à l'axe longitudinal du puits (3).

4. Agencement de filtre (1) selon l'une des revendications 1 à 3, **caractérisé en ce que** les tubes ascendants (7) sont disposés de manière décalée les uns par rapport aux autres dans la direction circonférentielle des unités de filtre (4).

5. Agencement de filtre (1) selon l'une des revendications 1 à 4, **caractérisé en ce que** les conduites montantes (7) forment un ensemble concentrique à l'axe longitudinal de l'arbre (3).

6. Agencement de filtre (1) selon l'une des revendications 1 à 5, **caractérisé en ce qu'**une conduite montante (7) débouche sur la face supérieure et/ou sur la face inférieure d'une unité de filtre (4), en particulier au moins une conduite montante (7) amenée à une unité de filtre (4) étant réalisée comme une conduite d'infiltre, par laquelle de l'eau peut être amenée à l'unité de filtre (4).

7. Agencement de filtre (1) selon l'une des revendications 1 à 6, **caractérisé en ce qu'**une conduite montante (7) conduite à une unité de filtre (4) est conçue comme une conduite de pompage, par laquelle l'eau peut être évacuée de cette unité de filtre (4).

8. Agencement de filtre (1) selon la revendication 7, **caractérisé en ce qu'**une pompe (10) est associée à la conduite de pompage dans la zone de la sortie de la conduite montante (7) au niveau de l'unité de filtre (4).

9. Agencement de filtre (1) selon l'une des revendications 1 à 8, **caractérisé en ce que** les surfaces périphériques des unités de filtre (4) sont perméables à l'eau, de sorte que la surface périphérique de chaque unité de filtre (4) peut évacuer de l'eau de celle-ci et de l'eau souterraine peut y être introduite.

10. Agencement de filtre (1) selon la revendication 9, **caractérisé en ce que** les surfaces extérieures des unités de filtre (4) sont chacune entourées d'une couche de matériau perméable à l'eau.

11. Agencement de filtre (1) selon la revendication 10, **caractérisé en ce que** la couche de matériau perméable à l'eau est formée par une couche de gravier.

12. Agencement de filtre (1) selon l'une des revendications 10 ou 11, **caractérisé en ce que** la couche de matériau perméable à l'eau est un composant de l'unité de filtre (4).

13. Agencement de filtre (1) selon l'une des revendications 1 à 12, **caractérisé en ce que** le matériau gonflant (6) est formé par des matériaux argileux.

14. Agencement de filtre (1) selon l'une des revendications 1 à 13, **caractérisé en ce que** les conduites montantes (7) sont reliées à une unité centrale hors sol, l'unité centrale comportant des moyens de filtre et/ou de traitement de l'eau.

15. Agencement de filtre (1) selon l'une des revendications 1 à 14, **caractérisé en ce qu'**il peut être sélectivement actionné dans le sens horaire ou antihoraire.
